# EUROPÄISCHE PATENTSCHRIFT

(11) **EP 0 800 016 B1**
(45) Veröffentlichungstag und Bekanntmachung des Hinweises auf die Patenterteilung: **24.04.2002**
(21) Anmeldenummer: 97104132.2
(22) Anmeldetag: 12.03.1997
(51) Int. Cl.: F16D 59/02, F16D 25/062

(54) **Schaltbare, bremswirksame oder kupplungswirksame Vorrichtung, wie eine Reibungsbremse oder eine Reibungskupplung**
Switchable device acting as a brake or clutch such as a friction brake or clutch
Dispositif commutable agissant comme frein ou embrayage, tel que frein ou embrayage à friction

(30) Priorität: 06.04.1996 DE 19613763
(43) Veröffentlichungstag der Anmeldung: 08.10.1997
(73) Patentinhaber: Ortlinghaus-Werke GmbH, 42929 Wermelskirchen (DE)
(72) Erfinder: Meller, Udo, 42929 Wermelskirchen (DE); Niepold, Dietrich, Dipl.-Ing., 63517 Rodenbach (DE); Hämmerl, Bernhard, Dr. Ing., 42929 Wermelskirchen (DE)
(74) Vertreter: Mentzel, Norbert, Dipl.-Phys.

(56) Entgegenhaltungen:
- DE-A- 2 814 200
- US-A- 2 284 193
- US-A- 3 233 710
- US-A- 3 640 363

## Beschreibung

Die Erfindung richtet sich auf eine Vorrichtung, bei welcher ein Druckring zwischen dem ersten und dem zweiten Vorrichtungsteil angeordnet ist. Der Druckring ist zwar drehfest bzw. ruhend mit dem ersten Vorrichtungsteil verbunden, aber durch ein Betätigungs- und Rückstellmittel zwischen zwei zueinander unterschiedlichen axialen Arbeitsstellungen überführbar, nämlich einer Wirkstellung und einer Freigabestellung. Zwischen dem Druckring und dem zweiten Vorrichtungsteil ist wenigstens ein Reibelement angeordnet, das in der Wirkstellung des Druckrings zusammengepresst wird. Derartige Vorrichtung werden als Reibungsbremse bei Servomotoren verwendet, mit denen Antriebe nach einem bestimmten Bewegungsprofil genau gesteuert werden müssen. Die Bremse muss nicht nur zu einer bestimmten Zeit wirksam gesetzt werden, sondern in ihrer Wirkstellung den Rotor gegenüber dem Stator der Bremse spielfrei festhalten; bei eingefallener Bremse darf nach Erreichen des Stillstands keine Drehbewegung mehr stattfinden.

Diese Zielsetzung war bei bekannten Vorrichtung (DE 28 14 200 A) unter Berücksichtigung wirtschaftlicher Aspekte nur kostenaufwendig zu erreichen. Die bekannte Vorrichtung ist als elektromagnetisch lüftbare Federdruckbremse ausgebildet. Der erste Vorrichtungsteil besteht aus einem am Maschinehgestell fixierten Stator mit integrierter Spule, an welcher eine als Druckring fungierende Ankerscheibe drehfest, aber axial beweglich verbunden ist. Die Ankerscheibe steht unter der Wirkung von Druckfedern, die bestrebt sind, das an einer axial von der Ankerscheibe angeordneten Bremsscheibe sitzt. Die Bremsscheibe ist der zweite, als Rotor fungierende Vorrichtungsteil, der mit einer abzubremsenden Welle verbunden ist. Durch Einschalten des Spulenstroms wird die Ankerscheibe auf elektromagnetischem Weg gegen die sie belastende Federkraft vom Reibelement der Bremsscheibe gelüftet, womit die Freigabestellung der Bremse vorliegt. Die elektromagnetische Steuerung erlaubt nur kleine Axialbewegungen der Ankerscheibe zwischen ihrer Wirk- und Freigabestellung. Deswegen muss, in Freigabestellung gesehen, der minimale Luftspalt zwischen der das Reibelement tragenden Bremsscheibe einerseits und der Ankerscheibe andererseits sehr genau justiert werden. Dies erfordert eine sehr aufwendige Herstellung und zeitaufwendige Montage der Bauteile innerhalb kleinster Toleranzen. Bei Verschleiß nach längerer Betriebsdauer sind umständliche Nachjustierungen erforderlich. Der axiale Reibschluss zwischen der Anker- und Bremsscheibe wird ausschließlich durch die Federkraft bestimmt, was bei hohen Bremsmomenten entsprechenden Federaufwand erfordert. In Wirkstellung der Bremse fällt das Bremsmoment an der Ankerscheibe an und muss axial auf den Stator der Bremse übertragen werden.

Es gibt Vorrichtungen mit außerhalb der beiden Vorrichtungsteile angeordneten Kolben-Zylindereinrichtungen (US 2,284,193 A), die über einen Hebel oder einen Schieber auf federnd verformbare profilierte Scheiben einwirken, die zwischen den beiden Vorrichtungsteilen angeordnet sind. An der Peripherie der Scheiben sitzen Bremsschuhe oder Kupplungsflansche, die über Reibelemente mit der Innenfläche einer zylindrischen Trommel zusammenwirken. Diese Trommel ist bei der Bremse drehfest mit dem Rotor und bei der Kupplung drehfest mit dem antreibenden Vorrichtungsteil verbunden. In Abhängigkeit davon, ob die Kolben-Zylindereinrichtung wirksam oder unwirksam gesetzt ist, verändert die mit dem Bremsschuh bzw. Kupplungsflansch versehene Scheibe ihre Form; sie wird bei der Bremse eingeebnet oder bei der Kupplung gegen die Wirkung einer Feder ausgebogen, wodurch die Treibelemente gegenüber der Zylinderfläche der Trommel gelüftet werden. Die verformbare Scheibe hat Ringform und ihre Ringöffnung ist mittels des Hebels bzw. Schiebers bezüglich des mit dem Reibelement ausgerüsteten Ringumfang axial verschieblich. Bei dieser Axial-Verschieblichkeit kommt am Umfang der Ringscheibe ein Reibschluss mit der Trommel zustande. Der Aufbau dieser Vorrichtung ist aufwendig und die Steuerung zur Verformung der bremsbzw. kupplungswirksamen Scheiben ist umständlich und störanfällig. Eine Anwendung auf Vorrichtungen die zwischen dem ersten und zweiten Vorrichtungsteil einen steuerbaren Druckring aufweisen, ist nicht ersichtlich.

Der Erfindung liegt die Aufgabe zugrunde, eine preiswerte, kompakte Vorrichtung der eingangs genannten Art zu entwickeln, die einfach zu montieren ist und sich in ihrer Wirkstellung durch einen besonders wirkungsvollen Reibschluss auszeichnet. Dies wird erfindungsgemäß durch die im Anspruch 1 angeführten Maßnahmen erreicht, denen folgende Bedeutung zukommt.

Bei der Erfindung ist der Druckring drehmomentfrei. In Wirkstellung des Druckrings werden nämlich die Drehmomente von der Trommel des zweiten Vorrichtungsteils unmittelbar auf die mit dem ersten Vorrichtungsteil verbundenen Fahrzeugen übertragen. Die Federzungen übernehmen die Federwirkungen und sind über das Reibelement mit der Trommel wirksam. Die Verstellung der Federzungen dagegen wird von den Übertragungsgliedern übernommen, deren Lage vom Druckring gesteuert wird. Die Übertragungsglieder sind im wesentlichen formsteife Bauteile. Die Federzungen sind spielfrei im Bereich des ersten Vorrichtungsteils befestigt und sichern damit in Wirkstellung eine drehfeste Verbindung zwischen den beiden Vorrichtungsteilen, die bremsenartig oder kupplungsartig zusammenwirken. Diese spielfreie Befestigung kann einfach dadurch entstehen, dass die festen Enden der Federzungen unmittelbar am ersten Vorrichtungsteil sitzen. Alternativ könnten diese festen Zungenenden auch an angrenzenden Maschinenbauteilen befestigt sein, so dass sie mittelbar zum ersten Vorrichtungsteil spielfrei sind. Besonders hervorzuheben ist aber der radiale Reibschluss in Wirkstellung der Vorrichtung, der sich an den gegenüberliegenden losen Zungenenden ergibt.

Obwohl durch die Betätigungs- bzw. Rückstellmittel der Druckring ausschließlich axialbeweglich ist, kommt ein radialer Reibschluss zustande. Dafür sorgen nämlich die Umlenkglieder, welche aus der Axialbewegung der Druckscheibe eine Radialbewegung der losen Zungenenden erzeugen. In ihrer Wirkstellung werden die losen Zungenenden gegenüber ihrer in der Freigabestellung vorliegenden Position entweder radial auseinandergespreizt oder radial zusammengedrückt. In der Wirkstellung wird ein Reibelement bzw. mehrfache Reibelemente wirksam gesetzt, welche im radialen Raum zwischen den losen Zungenenden einerseits und der zylindrischen Fläche einer mit dem zweiten Vorrichtungsteil fest verbundenen Trommel andererseits angeordnet sind. Die Federzungen und die Umlenkglieder sind zusammen mit dem Druckring zwischen den beiden Vorrichtungsteilen angeordnet.

Wegen der radialen Position der Reibelemente in der Vorrichtung kommt es auf eine axiale Justierung der Vorrichtung nicht mehr an, wie sie bei den eingangs genannten Vorrichtungen notwendig war. Außerdem kommt es zu einer großen Kraftverstärkung; mit einer verhältnismäßig kleinen Betätigungskraft wird eine sehr große Anpresskraft der Reibelemente erreicht. Diese Kraftverstärkung hängt ab vom radialen und axialen Versatz der beiden Enden der Umlenkglieder. Die Umlenkglieder sind nämlich mit ihren beiden Enden sowohl axial als auch radial zueinander versetzt. Man erhält eine Winkellage der Umlenkglieder, wodurch eine wesentlich größere radiale Kraftkomponente auf die Federzungen wirkt. Diese radiale Kraftkomponente führt zu dieser Kraftverstärkung.

Die aus einer Federzunge und einem zugehörigen Umlenkglied gebildete Baugruppe kann in sich einstückig sein oder aber zweistückig ausgebildet sein, was in den Unteransprüchen, der nachfolgenden Beschreibung und den Zeichnungen näher erläutert wird. Daraus sind auch weitere Maßnahmen und Vorteile der Erfindung ersichtlich. In den Zeichnungen ist die Erfindung in mehreren Ausführungsbeispielen dargestellt. Es zeigen:
- Fig. 1: einen schematischen Axialschnitt durch eine erste Ausführungsform der erfindungsgemäßen Vorrichtung, wenn diese als elektromagnetisch zu öffnende Federdruckbremse ausgebildet ist,
- Fig. 2: einen Querschnitt durch die Vorrichtung von Fig. 1, längs der dortigen Schnittlinie II - II,
- Fig. 3: in einer gegenüber Fig. 1 und 2 vergrößerten Darstellung einen Querschnitt durch ein Detail der in Fig. 1 gezeigten Vorrichtung, und zwar längs der Schnittlinie III-III von Fig. 1,
- Fig. 4a und 4b: in noch weiterer Vergrößerung zwei weitere Details der in Fig. 1 gezeigten Vorrichtung,
- Fig. 5,: in einem der Fig. 1 entsprechenden, allerdings vergrößerten Axialschnitt, ein letztes Detail der Vorrichtung in zwei unterschiedlichen Arbeitsstellungen, welche der Lüftungsstellung und der Einfallstellung der Reibungsbremse entsprechen,
- Fig. 6,: in einer der Fig. 1 entsprechenden Darstellung, einen Axialschnitt durch ein zweites Ausführungsbeispiel der erfindungsgemäßen Vorrichtung, die zwar auch als Federdruckbremse gestaltet ist, aber durch Druckmittel geöffnet werden kann,
- Fig. 7: zwar auch einen Axialschnitt einer dritten Ausführungsform der erfindungsgemäßen Vorrichtung, und zwar wieder als Federdruckbremse, die elektromagnetisch geöffnet werden kann, jedoch mit innenliegendem Rotor,
- Fig. 8: einen Querschnitt durch ein Detail der in Fig. 7 gezeigten Vorrichtung, und zwar längs der Schnittlinie VIII-VIII von Fig. 7,
- Fig. 9,: in einer der Fig. 1 entsprechenden Darstellung, einen Axialschnitt durch ein viertes Ausführungsbeispiel nach der Erfindung, wo die Vorrichtung als Kupplung ausgebildet ist, die durch Druckmittel wirksam gesetzt wird,
- Fig. 10,: in einer der Fig. 1 entsprechenden Darstellung, einen Axialschnitt durch ein fünftes Ausführungsbeispiel nach der Erfindung, wo die aus einer Federzunge und einem Umlenkglied jeweils gebildeten Baugruppen in sich einstückig ausgebildet sind,
- Fig. 11,: in starker Vergrößerung, ein Detail der in Fig. 10 gezeigten Vorrichtung,
- Fig. 12,: in noch stärkerer Vergrößerung und in Analogie zu Fig. 4b, ein weiteres Detail der in Fig. 10 bzw. 11 gezeigten Vorrichtung, und
- Fig. 13,: in einem der Fig. 8 entsprechenden Querschitt, ein Detail der in Fig. 11 gezeigten Vorrichtung, längs der Schnittlinie XIII-XIII von Fig. 11.

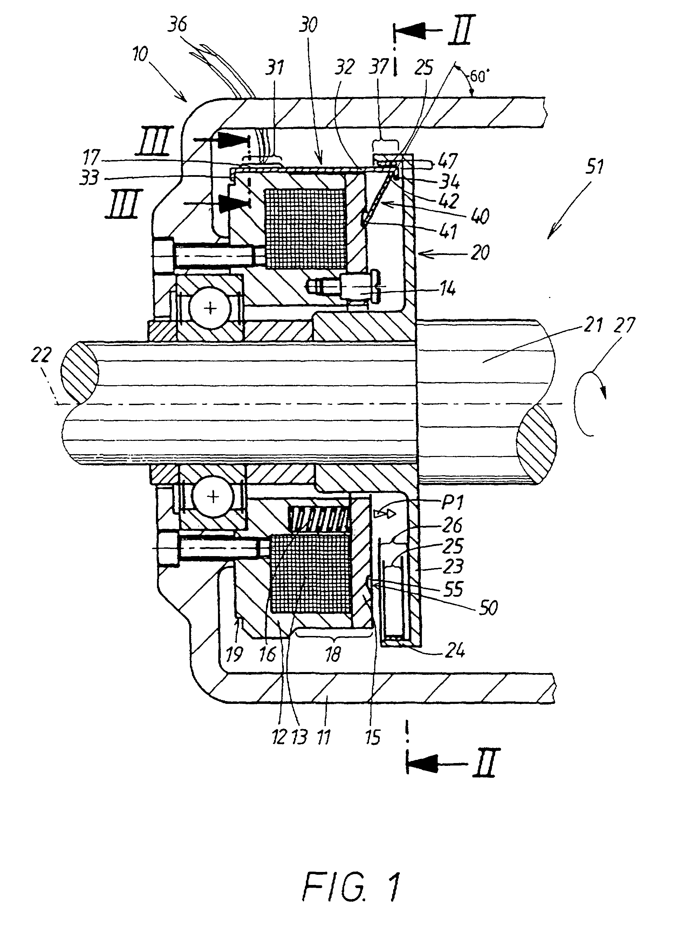

Das in Fig. 1 bis 5 gezeigte erste Ausführungsbeispiel der Vorrichtung zeigt eine Reibungsbremse 51, die als elektromagnetisch zu öffnende Federdruckbremse ausgebildet ist. Diese Bremse 51 umfaßt einen ersten stationären Vorrichtungsteil 10, der in einem Gehäuse 11, z. B. einem Motorlagerschild, einen Magnetkörper 12 besitzt, wobei im Magnetkörper 12 eine Spule integriert ist. Dieser Vorrichtungsteil 10 ist der "Stator" dieser Reibungsbremse 51. Ein Druckring 15 ist zwar radial ruhend mit dem Stator 10 verbunden, aber demgegenüber axial beweglich. Dafür dienen im Magnetkörper 12 angeordnete Führungsbolzen 14, welche Axialbohrungen im Druckring 15 durchsetzen. Der Druckring 15 besteht aus magnetisierfähigem Material und wirkt als Ankerscheibe bei Stromfluß in der Spule 13 mit dem Magnetkörper 12 zusammen. Der Druckring 15 steht unter der Wirkung von Druckfedern 16, die bestrebt sind, den Druckring 15 vom Magnetkörper 12 in Verlaufsrichtung der Wellenachse 22 wegzudrücken. Es sind im vorliegenden Fall mehrere Druckfedern 16 vorgesehen, die in Axialbohrungen des Magnetkörpers 12 sitzen und die durch den Pfeil P1 verdeutlichte Axialkraft ausüben.

Der andere Vorrichtungsteil der Bremse 51 ist der Rotor 20, welcher drehfest mit der im Betriebsfall abzubremsenden Welle 21 verbunden ist. Die Rotation der Welle 21 ist durch einen Drehpfeil 27 in Fig. 1 veranschaulicht. Der Rotor 20 umfaßt aber nicht nur eine drehfest mit der Welle 21 verbundene Scheibe 23, sondern auch noch eine an der Scheibe 23 sitzende zylindrische Trommel 24. In diesem Ausführungsbeispiel trägt die Trommel 24 an ihrer Zylinderinnenfläche ein Reibelement 25, das im vorliegenden Fall aus einem an der Zylinderfläche 26 sitzenden Reibbelag besteht.

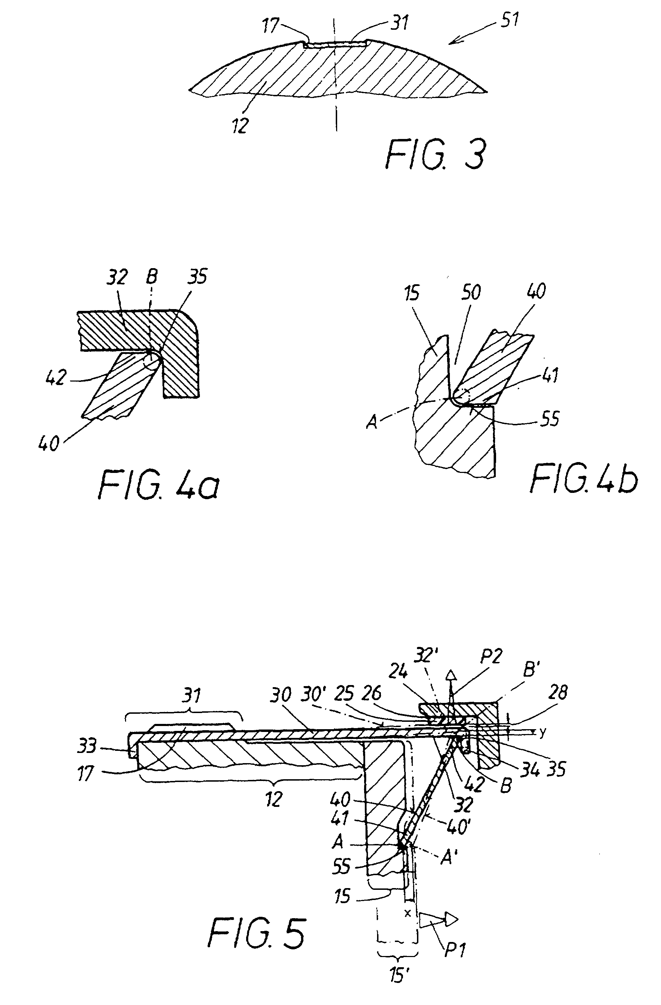

Eine erste Besonderheit der Erfindung liegt darin, daß im Bereich des Stators 10 elastische Körper sitzen, die im vorliegenden Fall aus radial federnden Zungen 30 bestehen, die nachfolgend kurz als "Federzungen" bezeichnet werden sollen. In diesem Fall bestehen die Federzungen selbst aus elastischem Material, wie Stahl, das eine radiale Federkraft aufgrund des Materials erzeugt. Es wäre aber auch möglich, zusätzliche Federn vorzusehen, welche an sich unelastische Zungen federnd machen. Im vorliegenden Fall sind die Federzungen 30 mit ihrem einen, festen Zungenende 31 unmittelbar am Magnetkörper 12 des Stators 10 verankert. Die Federzungen 30 haben die Form von Streifen. Die das feste Zungenende 31 bildenden Streifenenden sind, ausweislich der Fig. 3, in umfangsseitigen Axialnuten 17 des Magnetkörpers 12 durch Verformung der Axialnut befestigt, nachdem ihre definierte Länge eingestellt worden ist. Das feste Ende 31 der Federzungen kann ein radial nach innen abgewinkeltes Endstück 33 aufweisen, was eine entsprechend abgesetzte Schulter 19 am Magnetkörper 12 hintergreift. Dies erleichtert eine definierte Lage der Federzungen 30 bei ihrer Montage am Stator 10. Der angrenzende Abschnitt 18 des Magnetkörpers 12 kann abgesetzt sein, den das angrenzende Längenstück der Federzunge 30 jeweils mehr oder weniger frei überragt.

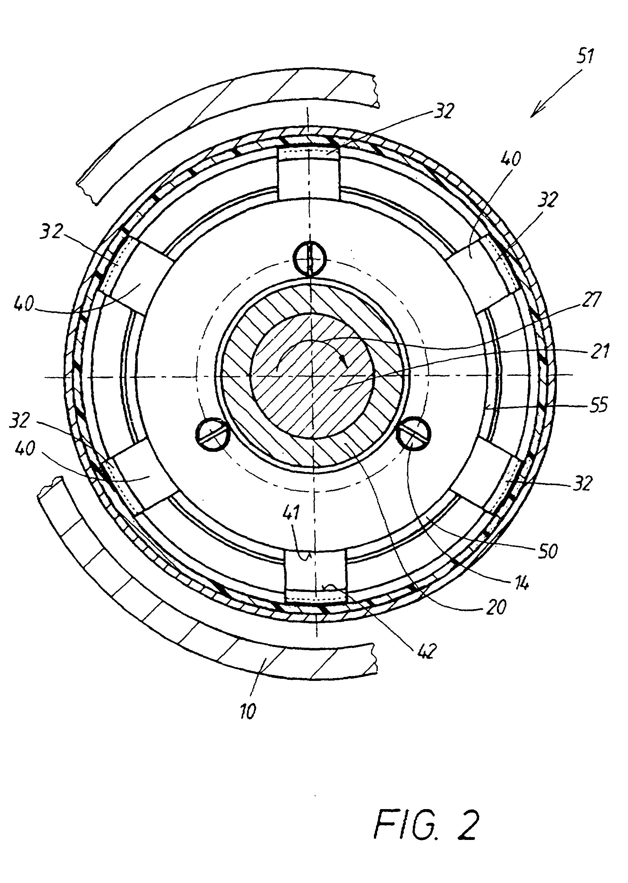

Im vorliegenden Ausführungsbeispiel der Federdruckbremse 51 sind sechs solcher Federzungen 30, auf dem Umfang des Magnetkörpers 12 angeordnet, von denen aber, aus Gründen der einfacheren Darstellung in Fig. 1, nur die oberste Federzunge 30 im Längsschnitt gezeigt ist, während die übrigen fünf Federzungen 30 weggelassen wurden. Diese Verteilung ist anhand der freien Zungenenden 32 aus Fig. 2 zu erkennen, die einen Querschnitt durch die Vorrichtung längs der Schnittlinie 11-11 von Fig. 1 in Stirnansicht zeigt. An den freien Zungenenden 32 besitzt, als weitere Besonderheit, die Erfindung im wesentlichen knicksteife Körper, die hier aus vereinzelten, plattenförmigen Gliedern 40 bestehen. Diese Glieder 40 sollen nachfolgend, aus noch näher zu erläuternden Gründen, als "Umlenkglieder" bezeichnet werden. Jeder Federzunge 30 ist ein eigenes Umlenkglied 40 zugeordnet. In diesem Fall bilden also die Federzungen 30 und die zugehörigen Umlenkglieder 40 ein mehrteiliges Paar. Wie aus Fig. 1 und 2 hervorgeht, ist der Druckring 15 mit einer koaxialen, stirnseitigen Ringnut 50 versehen, deren eine Nutflanke und der Nutgrund aus Fig. 4b ersichtliche Stützflächen 55 für das eine Gliedende 41 erzeugen. Das Umlenkglied 40 ist im wesentlichen knicksteif und das Gliedende 41 bildet mit den Stützflächen 55 einen ersten Gelenkpunkt A, wozu die Kante an diesem Gelenkende 41 zweckmäßigerweise gerundet ist. Dieser Gelenkpunkt A soll nachfolgend kurz "Innengelenk" bezeichnet werden.

Das andere Gliedende 42 stützt sich am freien Zungenende 32 ab, wofür auch dieses mit einem Endstück 34 radial nach innen abgewinkelt ist. Im Winkelinneren 35 stützt sich, wie am besten aus Fig. 5 zu ersehen ist, das Gliedende 42 ab, welches, ausweislich der Fig. 4a an seiner Außenkante ebenfalls gerundet ist. Dadurch entsteht zwischen dem Winkelinneren 35 und dem Gliedende 42 ein weiterer Gelenkpunkt B, der nachfolgend kurz "Außengelenk" bezeichnet werden soll. Die beiden Gliedenden 41, 42 sind zueinander sowohl axial als auch radial versetzt, wodurch sich ein Schrägverlauf der Umlenkglieder 40 ergibt, der mit der Wellenachse 22 einen Axialwinkel von ca. 60° im vorliegenden Fall ergibt. Die Umlenkglieder 40 nehmen somit einen konischen Verlauf zur Wellenachse 22 ein, wobei die druckring-seitigen Gliedenden 41 innen und die zungen-seitigen Gliedenden 42 außen liegen.

In Fig. 1 ist die Freigabestellung der Bremse 51 1 gezeigt. Diese liegt dann vor, wenn die Spule 13 über ihre Zuleitungen 36 stromdurchflossen ist, ein Magnetfeld aufbaut und dadurch die Druckscheibe 15 aufgrund des erzeugten elektromagnetischen Feldes an den Magnetkörper 12 heranzieht. Es liegt dann die in Fig. 5 mit 15 bezeichnete, axiale Ausgangslage des Druckrings 15 vor. Es besteht dann ein Luftspalt 28 zwischen dem freien Zungenende 32 einerseits und dem Reibbelag 25 auf der zum Rotor 20 gehörenden Trommel 24 vor. Die Zungenenden 32 überlappen sich mit der Trommel 24 in dem mit 37 in Fig. 1 beschriebenen Bereich. Der Reibbelag befindet sich also in dem zwischen der Trommel 24 und den Zungenenden 32 eingeschlossenen Radialraum 47.

Wenn die Spule 13 stromlos ist, wird, wie bereits erwähnt wurde, der Druckring 15 durch die auf ihn wirkende Axialkraft P1 der Druckfedern 16 axial in die strichpunktiert in Fig. 5 verdeutlichte andere Arbeitsstellung 15' überführt. Dadurch wandert das vorbeschriebene Innengelenk A um die axiale Strecke x in die Position A'. Das äußere Gliedende 42 der Umlenkglieder 40 kann aber diese Axialbewegung x nicht mitvollziehen, weil wegen der beschriebenen Gestaltung des Außengelenks B eine Axialbewegung dort ausgeschlossen ist. Das Umlenkglied 40 muß daher in eine gegenüber dem vorausgehenden Winkelverlauf steilere Position 40' überführt werden, die das dortige Außengelenk B im wesentlichen radial in die Position B' wegdrückt. Wie bereits erwähnt wurde, sind nämlich die Umlenkglieder 40 im wesentlichen starr. Weil aber die ihnen zugeordneten Federzungen 30 elastisch sind, können sie sich aus ihrer ursprünglichen, im wesentlichen gestreckten Position 30 von Fig. 5 in ihre radial auseinandergespreizte Position 30' um die radiale Strecke y von Fig. 5 ausbiegen. Diese Radialstrecke y überwindet den vorbeschriebenen Luftspalt 28. Dadurch kommen die freien Zungenenden in ihrer Spreizstellung 32' in Reibschluß mit dem trommelseitigen Belag 25. Dann befindet sich die Bremse 51 in ihrer Wirkstellung.

Aus der von den Druckfedern 16 erzeugten Axialkraft P1 entsteht nun eine reibungswirksame, durch den Pfeil P2 in Fig. 5 verdeutlichte Radialkraft. Wegen der steilen Lage der Umlenkglieder 40' in dieser bremswirksamen Stellung 40' der Umlenkglieder kommt es auch, wie durch die Länge der beiden Kraftpfeile P1 und P2 in Fig. 5 verdeutlicht ist, zu einer wesentlichen Kraftverstärkung. Man erhält einen besonders wirkungsvollen Reibschluß. Das Bremsmoment entsteht zwischen den Federzungen 30 und der mit dem Reibbelag 25 versehenen Zylinderinnenfläche 26. Das dabei anfallende Bremsmoment wird von den Federzungen 30' über die genannten, fest positionierten Zungenenden 31 unmittelbar vom Stator 10 aufgenommen, weshalb der Druckring 15 drehmomentfrei bleibt.

Bereits in der Ausgangsstellung 30 der Federzungen, wenn also die Freigabestellung der Bremse 51 gemäß Fig. 1 vorliegt, können die Druckglieder 40 schon unter einer axialen und radialen Vorspannung stehen. Dies läßt sich durch geeignete Längenbemessung der einzelnen Umlenkglieder 40 erzielen. Dadurch ist die Montagelage der Umlenkglieder 40 an ihren Innen- und Außengelenken A und B gesichert. Zur Lagesicherung der Umlenkglieder 40 können aber auch zwischen ihnen bestehende Verbindungen dienen.

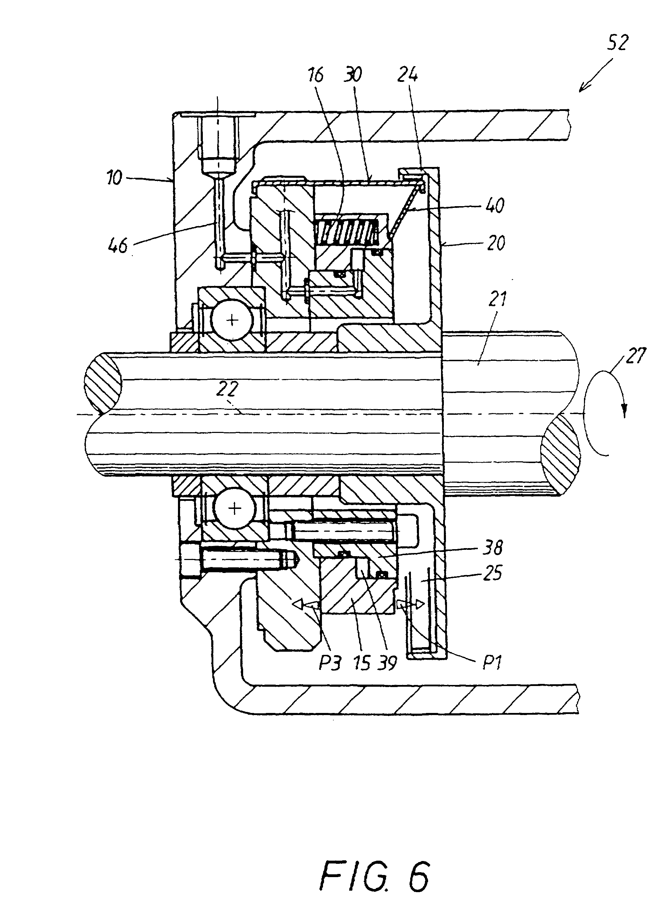

Fig. 6 zeigt, in einer der Fig. 1 entsprechenden Darstellung, eine alternative Ausbildung der Reibungsbremse, und zwar wiederum als Federdruckbremse 52, weil zum Überführen des dortigen Druckrings 15 in Wirkstellung ebenfalls Druckfedern 16 dienen. Zur Benennung entsprechender Bauteile sind die gleichen Bezugszeichen wie im ersten Ausführungsbeispiel von Fig. 1 bis 5 verwendet, weshalb insoweit die bisherige Beschreibung gilt. Es genügt, lediglich auf die Unterschiede einzugehen.

Ein wesentlicher Unterschied der in Fig. 6 gezeigten Bremse 52 besteht darin, daß sie durch Druckmittel gelüftet wird. Hier ist der Druckring 15 als sogenannter "Kolben" ausgebildet, während am Stator 10 sich ein sogenannter Zylinderteil 38 befindet. In diesem Fall sind die Druckfedern 16 in axiale Aufnahmen des als Kolbenteil fungierenden Druckrings 15 integriert. Zwischen dem Kolbenteil 15 und dem Zylinderteil 38 entsteht ein Druckmittelraum 39, der über diverse, in Fig. 6 erkennbare Kanäle 46 von einem Druckmittel beaufschlagt werden kann. Das eingeführte Druckmittel erzeugt eine der Druckfederkraft P1 entgegenwirkende Druckmittelkraft P3, welche für die in Fig. 6 erkennbare Lüftungsstellung sorgt. Um die Bremse in ihre Wirkstellung zu überführen, braucht nur die Druckmittel-Belastung aufzuhören. Dann kommt die Axialkraft P1 der Druckfedern 16 zur Entfaltung und führt zu der bereits im Zusammenhang mit Fig. 5 beschriebenen Spreizbewegung der Federzungen 30. Es kommt zu einem Reibschluß mit dem radial an der Innenfläche der dortigen Trommel 24 vorgesehenen Reibbelag 25.

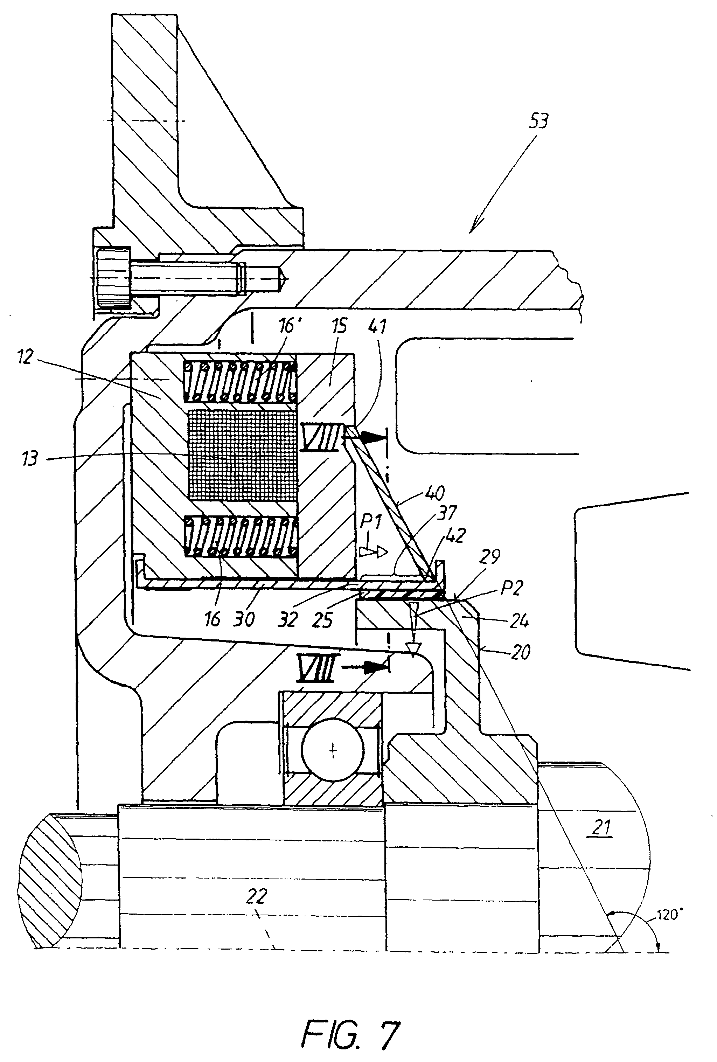

Im dritten Ausführungsbeispiel, gemäß Fig. 7, ist wieder eine elektromagnetisch zu öffnende Federdruckbremse 53 gezeigt, die hinsichtlich Aufbau und Wirkungsweise weitgehend der bereits im Zusammenhang mit Fig. 1 bis 5 beschriebenen Federdruckbremse 51 entspricht. Auch hier genügt es, lediglich die Abweichungen gegenüber den vorausgehenden Ausführungsbeispielen zu beschreiben. Es werden daher weitgehend die gleichen Bezugszeichen wie bisher verwendet, weshalb insoweit die bisherige Beschreibung gilt.

Der wesentliche Unterschied besteht darin, daß der axialbewegliche Druckring 15 und der ihm zugehörige Magnetkörper 12 mit der Spule 13 in größerem radialen Abstand zur Welle 21 angeordnet sind, als der mit der zylindrischen Trommel 24 versehene Rotor 20. Ferner sind die Federzungen 30, die einen prinzipiell gleichen Aufbau wie in den vorausgehenden Ausführungsbeispielen haben, nicht am Außenumfang des ringförmigen Magnetkörpers 12 angeordnet, sondern an dessen Innenumfang. Zur Erhöhung der Axialkraft P1 können, außer den bisherigen Druckfedern 16, noch eine weitere Reihe von Druckfedern 16' dienen. Eine weitere Besonderheit liegt in der gegenüber den bisherigen Ausführungsbeispielen gegensätzlichen Neigungslage der Umlenkglieder 40.

Dies ergibt sich, weil die am Druckring 15 sich abstützenden Gliedenden 41 in größerem axialen Abstand zur Wellenachse 22 angeordnet sind als ihre gegenüberliegenden, an den freien Zungenenden 32 sich abstützenden anderen Gliedenden 42. Hier liegen die zungenseitigen Gliedenden 42 innen und die druckring-seitigen Gliedenden 41 außen. Die Umlenkglieder 40 bilden mit der Wellenachse 22 einen stumpfen Winkel von ca. 120°. Die sich dabei ergebenden Wirkverhältnisse sind aber analog zu denjenigen, die im Zusammenhang mit Fig. 5 beschrieben worden sind, allerdings in einer dazu spiegelbildlichen Lage. Auch bei dieser Bremse 53 entsteht aus einer steuerwirksamen Axialkraft P1 eine größere, reibungswirksame Radialkraft P2, die jetzt aber radial nach innen, gegen die Wellenachse 22 gerichtet ist.

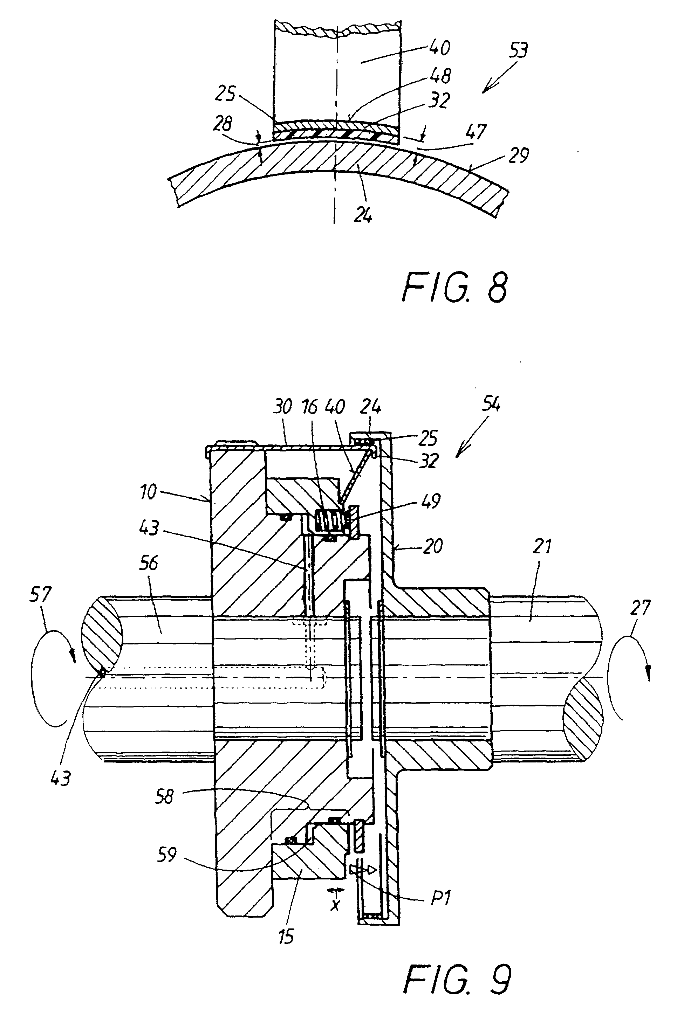

Fig. 8 verdeutlicht, anhand der Bremse 53, die Verhältnisse in einem der Wirklichkeit entsprechenden Maßstab, wo auch der entsprechende Luftspalt 28 in der Lüftungsstellung zu erkennen ist, allerdings gegenüber der jetzt reibungswirksamen Zylinderaußenfläche 29. Auch in diesem Fall ist das Reibelement in Form eines Reibbelags 25 im Radialraum 47 zwischen den freien Zungenenden 32 und der maßgeblichen Zylinderaußenfläche 29 der Trommel 24 angeordnet. Ein Unterschied besteht aber darin, daß dieser Reibbelag 25 nicht als umlaufender Ring an der Zylinderfläche 29 befestigt ist, sondern fester Bestandteil der freien Zungenenden 32 ist; die Federzungen tragen hier den Reibbelag 25. Aus dieser Fig. 8 ist aber noch etwas weiteres zu erkennen, was in analoger Weise auch bei den vorausgehenden Ausführungsbeispielen verwirklicht ist.

Zunächst einmal versteht es sich, daß die Zungen wenigstens in dem Überlappungsbereich 37 mit der Rotor-Trommel 24 ein in Fig. 8 erkennbares Querschnittsprofil aufweisen, das konform zur maßgeblichen Zylinderfläche 29 ausgebildet ist. Darüber hinaus sind aber auch die Umlenkglieder 40, wie Fig. 8 erkennen läßt, an ihren der Zunge 32 zugekehrten Stützkanten 48 konform zum zylindrischen Profil der freien Zungenenden 32 angepaßt. Diese Form der Stützkante 48 sorgt für eine Flächenberührung und ergibt eine geringe Flächenpressung im Betriebsfall. Dies gilt sinngemäß auch für die in Fig. 2 erläuterten Verhältnisse, und zwar an beiden Gliedenden 41, 42.

Fig. 9 zeigt, als viertes Ausführungsbeispiel der erfindungsgemäßen Vorrichtung, eine Kupplung 54. Auch hier sollen zur Benennung entsprechender Bauteile die gleichen Begriffe, wie in den vorausgehenden Ausführungsbeispielen der Bremse, benutzt werden. Dafür werden auch die gleichen Bezugszeichen benutzt, weshalb insoweit, zumindest in analoger Weise, die bisherige Beschreibung gilt. So kann es vorkommen, daß für die bisher verwendeten analogen Teile nur etwas abweichende Begriffe verwendet werden müssen.

Bei dieser Kupplung 54 soll in Wirkstellung, also im Kupplungsfall, eine Drehung 27 der Eingangswelle 21 in eine entsprechende Drehung 57 einer Ausgangswelle 56 übertragen werden. Dementsprechend sind, jeweils drehfest, ein erster Vorrichtungsteil 10, nämlich hier die erste Kupplungshälfte, mit der Ausgangswelle 56 und ein zweiter Vorrichtungsteil 20, nämlich die andere Kupplungshälfte, mit der Eingangswelle 21 drehfest verbunden. Abgesehen von dem auch hier an der Kupplungshälfte 10 vorgesehenen im Sinne des Doppelpfeils x axialbeweglichen Druckring 15 sind die beiden Vorrichtungsteile 10, 20 auch axialfest an ihren Wellen 21 bzw. 56 angebracht. Auch hier sind an dem einen Vorrichtungsteil 10 Druckfedern 16 vorgesehen, allerdings wirken diese in einer zu den vorausgehenden Ausführungsbeispielen gegensätzlichen Weise. Die Druckfedern 16 sind bestrebt, die Kupplung 54 in ihrer unwirksamen Stellung, nämlich in einer Entkupplungslage, zu halten. Die Federn 16 stützen sich nämlich an einem axialfest mit der Kupplungshälfte 10 versehenen Stützring 49 ab und greifen in Axialbohrungen des auch hier als Druckmittelkolben ausgebildeten Druckrings 15 ein. Axial gestufte Abschnitte im Vorrichtungsteil 10 erzeugen einen Zylinderteil 58, der mit dem Druckring 15 einen Druckmittelraum 59 einschließt.

Dem Druckmittelraum 59 wird das Druckmittel über axiale und radiale Kanäle 43 dann zugeleitet, wenn die wirksame Kupplungsstellung erwünscht ist. Das Druckmittel wirkt nun gegen die Rückstellwirkung der Druckfedern 16 und bewegt den Druckring 15 mit einer überschüssigen Axialkraft P1 nach außen. Die Axialkraft P1 ist also hier nicht federbedingt, sondern druckmittelerzeugt. In übriger Hinsicht aber ergeben sich die analogen, aus den vorausgehenden Ausführungsbeispielen beschriebenen Verhältnisse.

Auch hier ist der Vorrichtungsteil 10 Träger einer Schar von sich im wesentlichen axial erstreckenden Federzungen 30 und zwischen den freien Zungenenden 32 und dem Druckring 15 stützen sich auch hier wieder eine entsprechende Schar von Umlenkgliedern 40 ab. Der zweite Vorrichtungsteil 20 besitzt eine Trommel 24, die hier an ihrer Zylinderinnenfläche die beschriebenen Reibelemente 25 trägt. Es ergeben sich die analogen Wirkungen, die im Zusammenhang mit Fig. 5 beschrieben wurden. In der in Fig. 5 beschriebenen Wirkstellung 30', wo die Federzungen 30 gespreizt sind, wird bei der Kupplung 54 ein Drehmoment zwischen den Wellen 21, 56 übertragen.

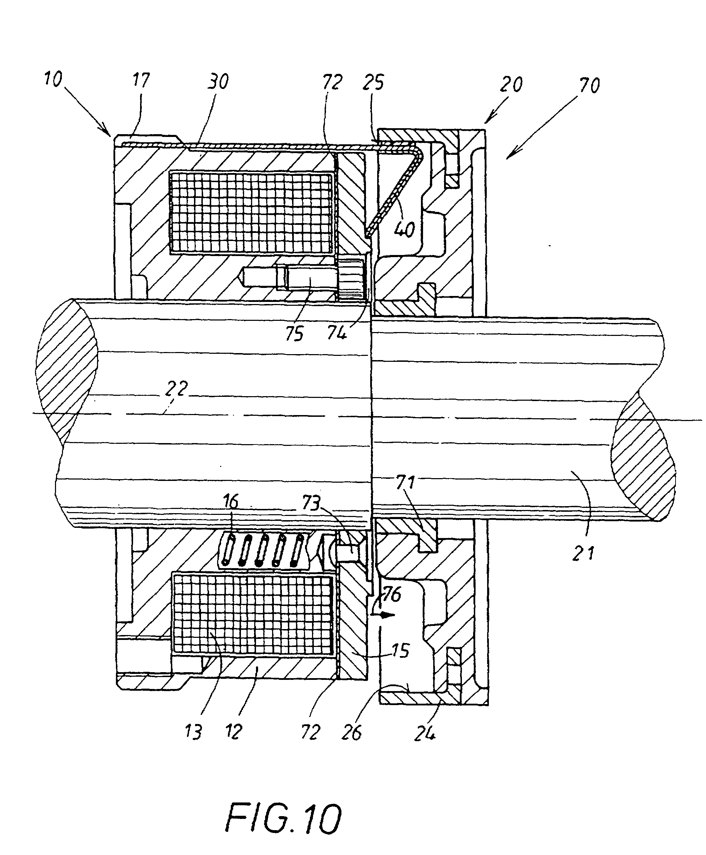

In den Fig. 10 bis 13 ist eine abgewandelte Ausführungsform 70 der bereits in den Fig. 1 bis 5 gezeigten Federdruckbremse dargestellt. Es genügt, lediglich auf die Unterschiede einzugehen, während im übrigen die bisherige Beschreibung mit den bisherigen Bezugszeichen gilt.

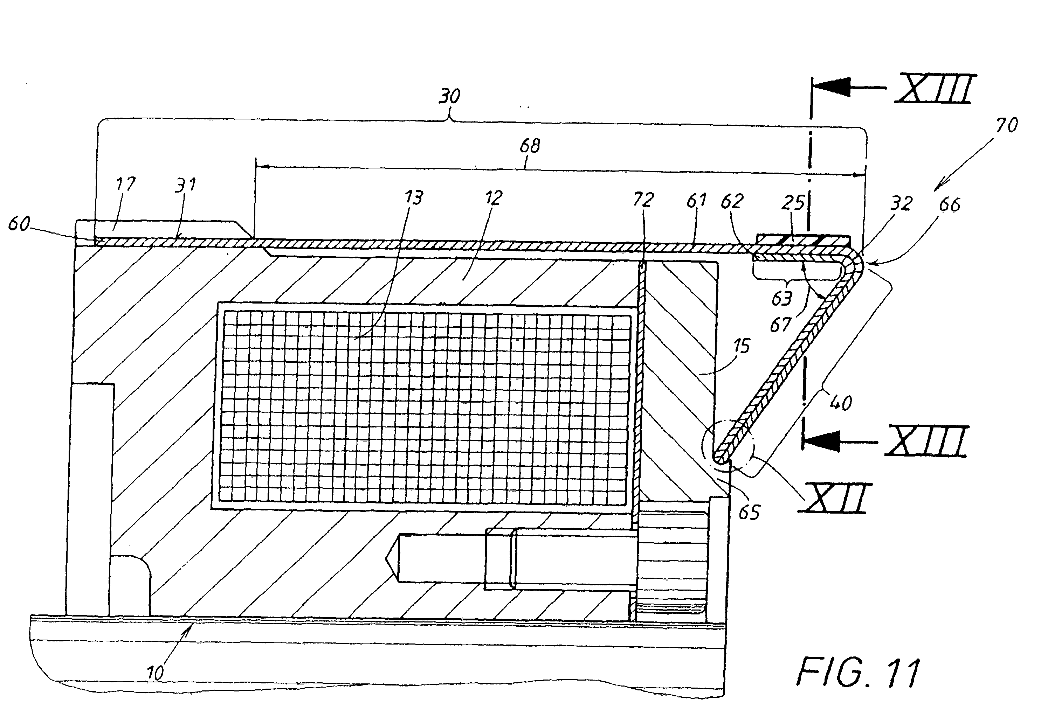

Ein wichtiger Unterschied der Federdruckbremse 70 besteht darin, daß das aus der Federzunge 30 und dem zugehörigen Umlenkglied 40 bestehende Paar, wie am besten aus Fig. 11 zu ersehen ist, einstückig ausgebildet ist. Diese Baugruppe wird aus einem Bandmaterial 60 erzeugt, das im vorliegenden Fall in sich elastisch ist, also z. B. aus Stahl besteht. An den Stellen, wo dieses Produkt elastisch nachgiebig sein soll, verläuft es in einer einzelnen Lage 61, während in den gewünschten steifen Abschnitten mehrere Lagen des Bandmaterials übereinandergelegt werden. Im vorliegenden Fall ist z. B. der zur Ausbildung des Umlenkglieds 40 dienende Abschnitt aus zwei Lagen 61, 62 gebildet. Diese zweite Lage 62 kann sich dabei mit einem Endstück 63, gemäß Fig. 11, in den Endbereich 32 der Zunge 30 erstrecken. Das Bandmaterial 60 ist auf diese Weise zu einem einstückigen Falt-Biege-Produkt 66 geworden, welches das Gliederpaar 30, 40 erzeugt und in folgender besonderer Weise in die Vorrichtung eingebaut wird.

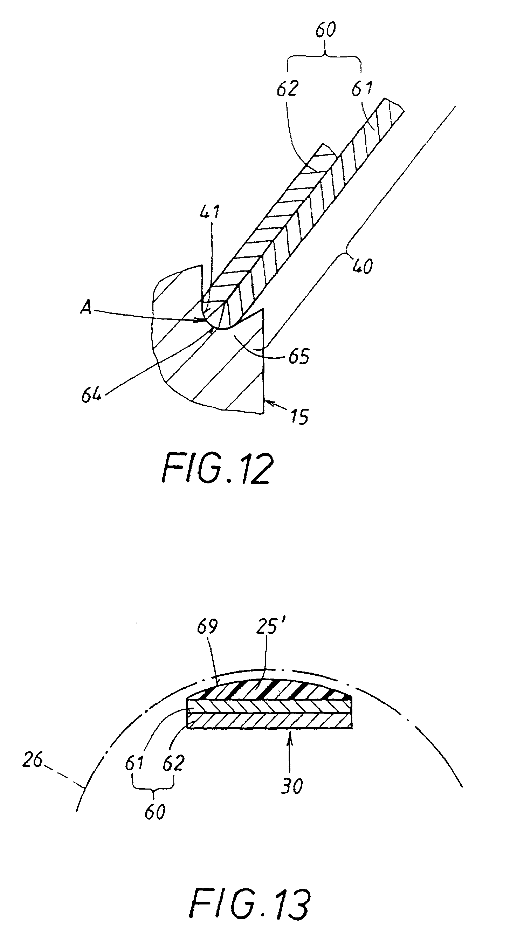

Der zur Bildung der Zunge 30 dienende Schenkel des Produkts 66 wird mit seinem Zungenende 31 in die bereits im vorausgehenden Ausführungsbeispiel erwähnte Axialnut 17 eingeschoben und ist darin zunächst axial verschieblich. Das Ende 41 des zur Bildung vom Umlenkglied 40 dienenden Abschnitts ist, wie in Fig. 12 verdeutlicht, gerundet und greift in eine entsprechend profilierte konkave Nut 64 des Druckrings 15 ein. Zur Ausbildung dieser Nut 64 ist der Druckring 15 mit einem Ansatz 65 versehen. Dort entsteht das bereits im Zusammenhang mit dem ersten Ausführungsbeispiel beschriebene Innengelenk A. Vor dem Einbau ist der Winkel 67 zwischen den beiden Schenkeln 30, 40 des Produkts 66 kleiner als im späteren Einbauzustand. Der Schenkel 30 des Produkts 66 wird auf eine definierte, aus Fig. 11 ersichtliche wirksame Länge 68 eingestellt. Die Zunge 30 ragt um diese Länge 68 aus der Führungsnut 17 heraus und ist in diesem Längenstück in der bereits beschriebenen Weise radial elastisch biegsam. Diese wirksame Zungenlänge 68 wird fixiert. Dies geschieht, indem man z. B. die Nut 17 staucht, wodurch das dort eingeschobene Federende 31 ortsfest wird. In diesem Einbauzustand ist, wie bereits erwähnt wurde, der Winkel 67 zwischen den beiden Schenkeln 30, 40 des Produkts 66 größer. Weil der Winkel 67 bestrebt ist, sich zu verkleinern, ergibt sich im Einbauzustand eine Feder-Vorspannung.

Fig. 11 zeigt, daß die Federzunge 30 im vorliegenden Fall Träger eines Reibelements 25' ist. Das Reibelement 25' befindet sich in jenem Endabschnitt, wo auch das Teilstück 63 der zweiten Lage 62 vom Bandmaterial 60 erscheint. Dadurch ist das Endstück der Federzunge 30, wo das Reibelement 25' sitzt, versteift. Das ist auch aus der Querschnittansicht von Fig. 13 zu erkennen.

Das Bandmaterial 60 ist eben ausgebildet, aber das auf den Lagen 61, 62 befestigte Reibelement 25' querschnittsmäßig in besonderer Weise profiliert. Das Reibelement 25' hat stellenweise eine unterschiedliche Belaghöhe und erzeugte eine zylindrisch gewölbte Reibungs-Wirkfläche 69 im radialen Umfangsbereich. Diese Wölbung 69 ist konform zu der in Fig. 13 strichpunktiert angedeuteten Zylinderinnenfläche 26 der aus Fig. 10 ebenfalls erkennbaren Trommel 24. Diese Trommel 24 sitzt mittels eines Preßrings 71 drehfest auf der Welle 21.

Zur Anordnung und Führung des Druckrings 15 dient eine elastische Federscheibe 72, deren Lage am besten aus Fig. 11 zu erkennen ist. Sie befindet sich zwischen dem Druckring 15 einerseits und dem Gehäuse des Magnetkörpers 12 andererseits, der die elektromagnetische Spule 13 beinhaltet. Die im ersten Ausführungsbeispiel bereits erwähnten Druckfedern 16 stützen sich an der Federscheibe 72 ab. Die Federscheibe 72 ist stellenweise durch Bolzen 73 am Druckring 15 angebracht. An radial versetzten Stellen dazu ist die Federscheibe 72 über Schrauben 75 am Magnetkörper-Gehäuse 12 befestigt.

Durch diese Federscheibe 72 ist der Druckring 15 in der Vorrichtung im Sinne des Pfeils 76 von Fig. 10 axialbeweglich. Diese Axialbewegung 76 ergibt sich in der bereits im ersten Ausführungsbeispiel geschilderten Weise durch Ein- und Ausschalten des Elektromagneten.

### Bezugszeichenliste:

- 10: erster Vorrichtungsteil, Stator bzw. erste Kupplungshälfte
- 11: Gehäuse von 10
- 12: Magnetkörper von 10
- 13: elektromagnetische Spule
- 14: Führungsbolzen für 15
- 15: Druckring, Ankerscheibe bzw. Druckmitcelkolben
- 15': Arbeitsstellung von 15
- 16: Druckfeder
- 16': zusätzliche Druckfeder (Fig. 7)
- 17: Axialnut in 12 für 31
- 18: abgesetzter Abschnitt von 12 für 30
- 19: abgesetzte Schulter von 12 für 33
- 20: zweiter Vorrichtungsteil, Rotor bzw. zweite Kupplungshälfte
- 21: Welle bzw. Eingangswelle (Fig. 10)
- 22: Wellenachse
- 23: Scheibe von 20
- 24: zylindrische Trommel von 20
- 25: Reibelement, Reibbelag
- 25: profiliertes Reibelement (Fig. 10 bis 13)
- 26: Zylinderinnenfläche von 24
- 27: Drehpfeil von 21
- 28: Luftspalt
- 29: Zylinderaußenfläche von 24
- 30: elastischer Körper, Federzunge
- 30': Spreizposition von 30 (Fig. 5)
- 31: festes Zungenende
- 32: freies, loses Zungenende
- 32': Spreizstellung von 32
- 33: festes Endstück von 31
- 34: bewegliches Endstück von 32
- 35: Winkelinneres bei 32
- 36: elektrische Zuleitungen für 13
- 37: Überlappungsbereich zwischen 32 und 24
- 38: Druckmittel-Zylinderteil von 10 (Fig. 6)
- 39: Druckmittelraum (Fig. 6)
- 40: Umlenkglied
- 40': steile Position von 40
- 41: erstes Gliedende von 40 bei 15
- 42: zweites Gliedende von 40 bei 32
- 43: Druckmittel-Kanäle (Fig. 10)
- 46: Druckmittelkanäle (Fig. 6)
- 47: Radialraum zwischen 32 und 24
- 48: Stützkante von 40
- 49: Stützring an 10 (Fig. 10)
- 50: axiale Ringnut für 40
- 51: Federdruckbremse (Fig. 1 bis 5)
- 52: Federdruckbremse (Fig. 6)
- 53: Federdruckbremse (Fig. 7)
- 54: pneumatische Kupplung (Fig. 10)
- 55: Stützflächen für 41
- 56: Ausgangswelle (Fig. 10)
- 57: Drehpfeil von 56
- 58: Druckmittelzylinder bei 54 (Fig. 10)
- 59: Druckmittelraum bei 54 (Fig. 10)
- 60: Bandmaterial
- 61: erste Lage von 60
- 62: zweite Lage von 60
- 63: Teilstück von 62
- 64: konkave Nut in 15
- 65: Ansatz von 15
- 66: Falt-Biege-Produkt
- 67: Winkel zwischen 30/40 (Fig. 11)
- 68: wirksame Zungenlänge von 30 (Fig. 11)
- 69: gewölbte Reibungs-Wirkfläche von 25' (Fig. 13)
- 70: Federdruckbremse (Fig. 10 bis 13)
- 71: Preßring zwischen 20, 21
- 72: elastische Federscheibe
- 73: Befestigungsbolzen für 72
- 74: Ausschnitt in 15 für 73
- 75: Schraube
- 76: Axialbewegungs-Pfeil von 15 (Fig. 10)

- A, A': Innengelenk zwischen 41, 55
- B, B': Außengelenk zwischen 42, 35

- P1: Axialkraft, federbedingt bzw. druck mittelbedingt (Fig. 10)
- P2: reibungswirksame Radialkraft
- P3: druckmittelerzeugte Gegenkraft (Fig. 6)

- x: Strecke der Axialbewegung zwischen A, A'
- y: Strecke der Radialbewegung zwischen B, B'

## Patentansprüche

1. Schaltbare, bremswirksame oder kupplungswirksame Vorrichtung, wie eine Reibungsbremse (51) oder eine Reibungskupplung (54), umfassend
einen ersten Vorrichtungsteil (10), wie den Stator einer Bremse (51) oder die erste Hälfte einer Kupplung (54),
einen zweiten Vorrichtungsteil (20), wie den Rotor einer Bremse (51) oder die zweite Hälfte einer Kupplung (54),
und einen zwischen dem ersten und zweiten Vorrichtungsteil (10, 20) angeordneten Druckring (15), der zwar drehfest bzw. ruhend mit dem ersten Vorrichtungsteil (10) verbunden ist, aber durch ein Betätigungs- und Rückstellmittel, wie Federn (16), Elektromagnetismus und/oder Druckmittel, zwischen zueinander axial versetzten Arbeitsstellungen überführbar ist,
nämlich einer ersten wirksamen Stellung (Wirkstellung), wie der Einfallstellung einer Bremse (51), und einer zweiten unwirksamen Stellung (Freigabestellung), wie einer Lüftstellung der Bremse (51),
mit einer Schar von radial federnden Zungen (Federzungen 30), die mit ihrem einen, festen Zungenenden (31) im Bereich des ersten Vorrichtungsteils (10) spielfrei befestigt sind,
und mit einer Schar von Gliedern (Umlenkgliedern 40), die sich am Druckring abstützen und mit den anderen, beweglichen Zungenenden (32) verbunden sind und zur Umlenkung der Axialbewegung (x) des Druckrings (15) in eine Radialbewegung (y) der beweglichen Zungenenden (32) dienen,
wobei die beiden Gliedenden (41, 42) der Umlenkglieder (40) sowohl axial als auch radial miteinander versetzt sind,
und schließlich mit einer zylindrische Trommel (24) am zweiten Vorrichtungsteil (20), welche sich mit den beweglichen Zungenenden (32) axial überlappt (37),
wobei das Reibelement (25) im Radialraum (47) zwischen der Zylinderfläche (26; 29) der Trommel (24) und den freien Zungenenden (32) angeordnet ist.

2. Vorrichtung nach Anspruch 1, **dadurch gekennzeichnet, daß** die Umlenkglieder mit einem Gelenk (A) jeweils am Druckring (15) abgestützt sind.

3. Vorrichtung nach Anspruch 1 oder 2, **dadurch gekennzeichnet, daß** die Umlenkglieder (40) getrennt von den Federzungen (30) hergestellt sind und mit einem weiteren Gelenk (B) an den freien Zungenenden (32) abgestützt sind.

4. Vorrichtung nach Anspruch 1 oder 2, **dadurch gekennzeichnet, daß** die Federzunge (30) mit dem ihr zugeordneten Umlenkglied (40) einstückig ausgebildet ist.

5. Vorrichtung nach Anspruch 4, **dadurch gekennzeichnet, daß** ein Falt-Biege-Produkt (66) aus Bandmaterial (60) ein zusammengehöriges Paar aus einem Umlenkglied (40) und einer Federzunge (30) bildet, wobei das Bandmaterial (60) wenigstens in Abschnitten des Falt-BiegeProdukts mehrlagig verläuft.

6. Vorrichtung nach einem oder mehreren der Ansprüche 1 bis 5, **dadurch gekennzeichnet, daß** die Zungen (30) mindestens im Überlappungsbereich (37) mit der Trommel (24) ein konform zur Zylinderfläche (26; 29) ausgebildetes Querschnittsprofil aufweist.

7. Vorrichtung nach einem oder mehreren der Ansprüche 1 bis 6, **dadurch gekennzeichnet, daß** die Federzungen (30) Träger des Reibelements (25) sind.

8. Vorrichtung nach Anspruch 7, **dadurch gekennzeichnet, daß** die Zungen (30) zwar aus ebenem Bandmaterial (60) bestehen, aber das von Ihnen getragene Reibelement (25') profiliert ist und eine gewölbte Reibungs-Wirkfläche (69) besitzt.

9. Vorrichtung nach einem oder mehreren der Ansprüche 1 bis 8, **dadurch gekennzeichnet, daß** die Umlenkglieder (40) untereinander verbunden sind.

10. Vorrichtung nach Anspruch 9, **dadurch gekennzeichnet, daß** die Verbindung aus einem Halter besteht, der die Umlenkglieder (40) zueinander positioniert.

11. Vorrichtung nach Anspruch 9 oder 10, **dadurch gekennzeichnet, daß** die Verbindung zwischen den einzelnen Umlenkgliedern (40) elastisch ausgebildet ist.

12. Vorrichtung nach einem oder mehreren der Ansprüche 1 bis 11, **dadurch gekennzeichnet, daß** die Umlenkglieder (40) an ihrem den Zungen (30) zugekehrten Gliedende eine Stützkante (48) aufweisen, die konform zum Profil der freien Zungenenden (32) ausgebildet ist.

13. Vorrichtung nach einem oder mehreren der Ansprüche 1 bis 12, **dadurch gekennzeichnet, daß** die Federzunge (30) einerseits und das Umlenkglied (40) andererseits unter einer axialen und radialen Vorspannung stehen, wenn das aus ihnen gebildete, zusammengehörige Paar in der Vorrichtung eingebaut ist.

14. Vorrichtung nach Anspruch 13, **dadurch gekennzeichnet, daß** bei einem einstückig ausgebildeten Paar der Winkel (67) zwischen dem die Federzunge (30) bildenden Abschnitt des Falt-BiegeProdukts (66) einerseits und dem die Umlenkglieder (40) erzeugenden Abschnitt andererseits im Einbauzustand des Produkts (66) in der Vorrichtung größer ist als im Ausbauzustand.

15. Vorrichtung nach einem oder mehreren der Ansprüche 1 bis 13, **dadurch gekennzeichnet, daß** bei einem zweistückigen Paar das freie Zungenende (32) radial nach innen abgewinkelt (34) ist und das zugehörige Umlenkglied (40) sich mit seinem Außenende im Winkelinneren (35) abstützt.

16. Vorrichtung nach einem oder mehreren der Ansprüche 1 bis 15, **dadurch gekennzeichnet, daß** das eine Ende (31) der Federzunge (30) während der Montage zwar in einer Halterung (17) des Vorrichtungsteils (10) zunächst längsverschieblich ist und die Einstellung einer definierten wirksamen Länge (68) der Federzunge (30) erlaubt, aber nach der Längeneinstellung der Federzunge (30) dieses Ende (31) in der Halterung (17) der Vorrichtung ortsfest fixiert wird.

17. Vorrichtung nach einem oder mehreren der Ansprüche 1 bis 15, **dadurch gekennzeichnet, daß** das feste Ende (31) der Federzunge (30) seinerseits radial nach innen abgewinkelt (33) ist und mit seiner Abwinkelung (33) entweder unmittelbar den ersten Vorrichtungsteil (10) hintergreift oder mittelbar dazu, an einem benachbarten Bauteil angreift.

18. Vorrichtung nach einem oder mehreren der Ansprüche 1 bis 17, **dadurch gekennzeichnet, daß** der Druckring (15) im Vorrichtungsteil (10) durch eine biegsame Federscheibe (72) axial beweglich (76) geführt ist, wobei die Federscheibe (72) stellenweise (73) am Vorrichtungsteil (10) und an dengegenüber versetzten Stellen (75) am Druckring befestigt ist.

19. Vorrichtung nach Anspruch 18, **dadurch gekennzeichnet, daß** bei einem als Stator (10) eines Elektromagneten ausgebildeten Vorrichtungsteils die Federscheibe (72) zwischen dem Druckring (15) einerseits und einem Gehäuse (12) des Elektromagneten andererseits angeordnet ist.

## Claims

1. A switchable device acting as a brake or a clutch, such as a friction brake (51) or a friction clutch (54), comprising
a first device part (10), such as the stator of a brake (51) or the first half of a clutch (54),
a second device part (20), such as the rotor of a brake (51) or the second half of a clutch (54),
and a thrust ring (15), which is arranged between the first and second device parts (10, 20), is connected in a non-rotatable or static manner with the first device part (10) but can be transferred between axially offset operating positions by actuating and restoring means, such as springs (16), electromagnetism and/or pressure medium,
namely a first effective position (active position), such as the engaged position of a brake (51), and a second ineffective position (release position), such as a ventilate position of the brake (51),
with a plurality of radially resilient tongues (spring tongues 30), which are secured with their first, fixed tongue ends (31) in a clearance-free manner in the region of the first device part (10),
and with a plurality of members (deflecting members 40), which are supported on the thrust ring and are connected to the other, movable tongue ends (32) and are used for deflecting the axial movement (x) of the thrust ring (15) into a radial movement (y) of the movable tongue ends (32),
the two member ends (41, 42) of the deflecting members (40) being offset relative to one another both axially and radially,
and finally with a cylindrical drum (24) on the second device part (20), which axially overlaps the movable tongue ends (32),
the friction element (25) being arranged in the radial space (47) between the cylinder surface (26; 29) of the drum (24) and the free tongue ends (32).

2. A device according to claim 1, **characterised in that** the deflecting members are supported at the thrust ring (15) by means of a hinge (A) in each case.

3. A device according to claim 1 or 2, **characterised in that** the deflecting members (40) are manufactured separately from the spring tongues (30) and are supported at the free tongue ends (32) by means of a further hinge (B).

4. A device according to claim 1 or 2, **characterised in that** the spring tongue (30) is integrally formed with its associated deflecting member (40).

5. A device according to claim 4, **characterised in that** a folded-bent product (66) made of strip material (60) forms a matching pair of deflecting member (40) and spring tongue (30), the strip material (60) extending in multi-layered fashion at least in sections of the folded-bent product.

6. A device according to one or more of claims 1 to 5, **characterised in that**, at least in the overlap region (37) with the drum (24), the tongues (30) comprise a cross sectional profile matching the cylinder surface (26; 29).

7. A device according to one or more of claims 1 to 6, **characterised in that** the spring tongues (30) are supports of the friction element (25).

8. A device according to claim 7, **characterised in that**, whilst the tongues (30) are made of flat strip material (60), the friction element (25') supported by the tongues (30) is profiled and has a curved active friction surface (69).

9. A device according to one or more of claims 1 to 8, **characterised in that** the deflecting members (40) are connected to one another.

10. A device according to claim 9, **characterised in that** the connection is formed by a holding element, which positions the deflecting members (40) relative to one another.

11. A device according to claim 9 or 10, **characterised in that** the connection between the individual deflecting members (40) is elastic in construction.

12. A device according to one or more of claims 1 to 11, **characterised in that**, at their member ends facing the tongues (30), the deflecting members (40) comprise a support edge (48), which matches the profile of the free tongue ends (32).

13. A device according to one or more of claims 1 to 12, **characterised in that** the spring tongue (30) on the one hand and the deflecting member (40) on the other hand are axially and radially prestressed when the matching pair formed by the said parts is fitted in the device.

14. A device according to claim 13, **characterised in that**, in the case of an integrally formed pair, the angle (67) between the section of the folded-bent product (66) forming the spring tongue (30) on the one hand and the section producing the deflecting members (40) on the other hand is greater in the fitted state of the product (66) in the device than in the dismantled state.

15. A device according to one or more of claims 1 to 13, **characterised in that**, in the case of a two-part pair, the free tongue end (32) is radially inwardly angled (34) and the associated deflecting member (40) is supported with its outer end in the angle interior (35).

16. A device according to one or more of claims 1 to 15, **characterised in that** one end (31) of the spring tongue (30) is initially longitudinally displaceable in a mounting element (17) of the device part (10) and allows for the adjustment of a defined effective length (68) of the spring tongue (30), but following the length adjustment of the spring tongue (30) the said end (31) is fixed in stationary fashion in the mounting element (17) of the device.

17. A device according to one or more of claims 1 to 15, **characterised in that** the fixed end (31) of the spring tongue (30) is in turn radially inwardly angled (33) and with its angled section (33) either engages directly behind the first device part (10) or acts indirectly upon the first device part (10) via an adjacent component.

18. A device according to one or more of claims 1 to 17, **characterised in that** the thrust ring (15) is axially displaceably guided in the device part (10) by a bendable spring plate (72), the spring plate (72) being secured at locations (73) to the device part (10) and to the thrust ring at locations (75) offset relative to the locations (73).

19. A device according to claim 18, **characterised in that**, in the case of a device part constructed as a stator (10) of an electromagnet, the spring plate (72) is arranged between the thrust ring (15) on the one hand and a housing (12) of the electromagnet on the other hand.

## Revendications

1. Dispositif commutable, agissant en frein ou agissant en embrayage, tel qu'un frein à friction (51) ou un embrayage à friction (54), comprenant :
- une première partie de dispositif (10), tel que le stator d'un frein (51) ou la première moitié d'un embrayage (54),
- une deuxième partie de dispositif (20), tel que le rotor d'un frein (51) ou la deuxième moitié d'un embrayage (54),
- et un anneau de pressage (15), disposé entre la première et la deuxième partie de dispositif (10, 20), qui est, certes, relié, de façon assujettie en rotation ou stationnaire, à la première partie de dispositif (10), mais qui est susceptible d'être passé, à l'aide d'un moyen d'actionnement et de rappel, tel que des ressorts (16), par électromagnétisme et/ou par un fluide sous pression, entre des positions de travail décalées axialement l'une par rapport à l'autre,
- précisément, en une première position efficace (position active), telle que la position d'enclenchement d'un frein (51), et une deuxième position non efficace (position de libération), telle qu'une position décollée du frein (51),
- avec une pluralité de languettes (languettes élastiques 30) à élasticité radiale, qui sont fixées sans jeu par une de leurs extrémités, l'extrémité de languette fixe (31), dans la zone de la première partie de dispositif (10)
- et avec une pluralité d'organes (organes de renvoi 40) qui prennent appui sur la bague de pressage et sont reliés aux autres extrémités de languettes (32) mobiles et servent à transformer le déplacement axial (x) de la bague de pression (15) en un déplacement radial (y) des extrémités de languettes (32) mobiles,
- les deux extrémités d'organes (41, 42) des organes de renvoi (40) étant décalées entre elles, tant axialement qu'également radialement,
- et, enfin, avec un tambour (24) cylindrique sur la deuxième partie de dispositif (20), qui est chevauché axialement (37) par les extrémités de languettes (32) mobiles,
- l'élément de friction (25) étant installé dans l'espace radial (47) existant entre la surface cylindrique (26; 29) du tambour (24) et les extrémités de languettes (32) libres.

2. Dispositif selon la revendication 1, **caractérisé par le fait que** les organes de renvoi sont soutenus chacun sur la bague de pressage (15) à l'aide d'une articulation (A).

3. Dispositif selon la revendication 1 1 ou 2, **caractérisé par le fait que** les organes de renvoi (40) sont fabriqués séparément des languettes élastiques (30) et sont soutenus sur les extrémités de languettes (32) libres, à l'aide d'une autre articulation (B).

4. Dispositif selon la revendication 1 ou 2, **caractérisé par le fait que** la languette élastique (30) est réalisée d'une seule pièce avec l'organe de renvoi (40) lui étant associé.

5. Dispositif selon la revendication 4, **caractérisé par le fait qu'**un produit à flexion et pliage (66), formé d'un matériau en bande (60) forme une paire, afférente, d'un organe de renvoi (40) et d'une languette élastique (30), le matériau en bande (60) s'étendant en plusieurs couches, au moins dans des tronçons du produit à flexion et pliage.

6. Dispositif selon une ou plusieurs des revendications 1 à 5, **caractérisé par le fait que** les languettes (30) présentent, au moins dans la zone de chevauchement (37) avec le tambour (24), un profil de section transversale se conformant à la surface de cylindre (26; 29).

7. Dispositif selon l'une ou plusieurs des revendications 1 à 6, **caractérisé par le fait que** les languettes (30) sont le support de l'élément à friction (25).

8. Dispositif selon la revendication 7, **caractérisé par le fait que** les languettes (30) sont, certes, constituées d'un matériau en bande (60) plan, mais l'élément à friction (25') porté par elles est profilé et a une surface active en friction (69) bombée.

9. Dispositif selon l'une ou plusieurs des revendications 1 à 8, **caractérisé par le fait que** les organes de renvoi (40) sont reliés entre eux.

10. Dispositif selon la revendication 9, **caractérisé par le fait que** la liaison est formée d'un support positionnant entre eux les organes de renvoi (40).

11. Dispositif selon la revendication 9 ou 10, **caractérisé par le fait que** la liaison entre les différents organes de renvoi (40) est élastique.

12. Dispositif selon l'une ou plusieurs des revendications 1 à 11, **caractérisé par le fait que** les organes de renvoi (40) présentent, sur leurs extrémités d'organe, tournées vers les languettes (30), une arête d'appui (48) se conformant au profil des extrémités de languettes (32) libres.

13. Dispositif selon l'une ou plusieurs des revendications 1 à 12, **caractérisé par le fait que** la languette élastique (30), d'une part, et l'organe de renvoi (40), d'autre part, sont placés sous une précontrainte axiale et radiale, lorsque la paire afférente, formée de ces éléments, est montée dans le dispositif.

14. Dispositif selon la revendications 13, **caractérisé par le fait que**, dans le cas où la paire est réalisée d'une seule pièce, l'angle (67) entre le tronçon formant la languette élastique (30) du produit à flexion et pliage (66), d'une part, et du tronçon générant les organes de renvoi (40), d'autre part, lorsque le produit (66) est à l'état monté dans le dispositif, est supérieur à ce qu'il est à l'état démonté.

15. Dispositif selon l'une ou plusieurs des revendications 1 à 13, **caractérisé par le fait que**, dans le cas où la paire est réalisée en deux éléments, l'extrémité de languette (32) libre est coudée radialement vers l'intérieur (34) et l'organe de renvoi (40) afférent, prend appui à l'intérieur du coudage (35), par son extrémité extérieure.

16. Dispositif selon l'une ou plusieurs des revendications 1 à 15, **caractérisé par le fait qu'**une extrémité (31) de la languette élastique (30) pendant le montage est, certes, d'abord déplaçable longitudinalement dans une fixation (17) de la partie de dispositif (10) et permet le réglage d'une longueur (68) efficace définie de la languette élastique (30), mais, après réglage de la longueur de la languette élastique (30), cette extrémité (31) est fixée de façon localement fixe dans la fixation (17) du dispositif.

17. Dispositif selon l'une ou plusieurs des revendications 1 à 15, **caractérisé par le fait que** l'extrémité fixe (31) de la languette élastique (30) de son côté, est coudée radialement vers l'intérieur (33) et soit saisit par l'arrière, avec son coudage (33), directement la première partie de dispositif (10), soit agit, indirectement envers celui-ci, sur un deuxième composant voisin.

18. Dispositif selon l'une ou plusieurs des revendications 1 à 17, **caractérisé par le fait que** la bague de pressage (15) est guidée de façon mobile axialement (76) dans la partie de dispositif (10) au moyen d'une rondelle élastique (72) flexible, la rondelle élastique (72) étant fixée par endroits (73) sur la partie de dispositif (10) et, sur les endroits (75) décalés par rapport à ceux-ci, est fixée sur la bague de pressage.

19. Dispositif selon la revendication 18, **caractérisé par le fait que**, dans le cas d'une partie de dispositif réalisée sous la forme de stator (10) d'un électro-aimant, la rondelle élastique (72) est disposée entre la bague de pressage (15), d'une part, et un boîtier (12) de 1'électro-aimant, d'autre part.
